(19) Europäisches Patentamt
European Patent Office
Office européen des brevets

(11) Veröffentlichungsnummer: **0 378 105 A2**

(12) **EUROPÄISCHE PATENTANMELDUNG**

(21) Anmeldenummer: **90100147.9**

(51) Int. Cl.5: **C08G 73/10, C08G 77/42**

(22) Anmeldetag: **04.01.90**

(30) Priorität: **12.01.89 DE 3900675**

(43) Veröffentlichungstag der Anmeldung: **18.07.90 Patentblatt 90/29**

(84) Benannte Vertragsstaaten: **BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Hedtmann-Rein, Carola, Dr.**
**Winzerweg 1**
**D-6945 Hirschberg(DE)**
Erfinder: **Heinz, Gerhard, Dr.**
**Im Vogelsang 2**
**D-6719 Weisenheim(DE)**

(54) **Hochtemperaturbeständige Polysulfon-Polyimid-Blockcopolykondensate, Verfahren zu ihrer Herstellung durch Schmelzkondensation und ihre Verwendung.**

(57) Gegenstand der Erfindung sind hochtemperaturbeständige Polysulfon-Polyimid-Blockcopolykondensate, die aufgebaut sind aus mindestens einem Polyarylenethersulfonblock mit Einheiten der Struktur

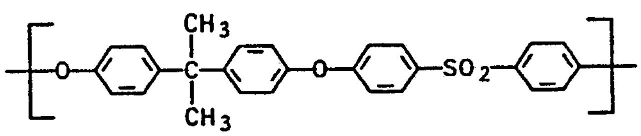

(I),

und/oder

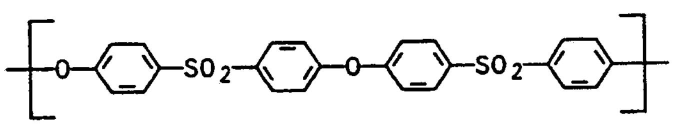

(II),

und mindestens einem Polyimidblock mit Einheiten der Struktur

EP 0 378 105 A2

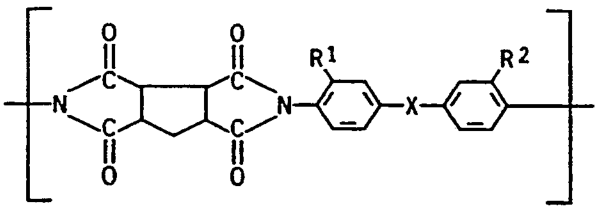

(III),

und/oder

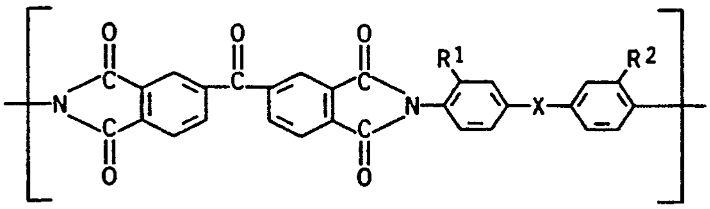

(IV),

wobei $R^1$ und $R^2$ gleich oder verschieden sind und ein Wasserstoffatom oder eine Methylgruppe und X eine Methylen- oder 1,2-Ethylengruppe bedeuten.

Zu ihrer Herstellung werden an nach bekannten konventionellen Methoden erhaltenen aminterminierten Polyarylenethersulfonblöcke durch Schmelzkondensation Polyimidblöcke ankondensiert.

Die erfindungsgemäßen Blockcopolykondensate eignen sich z.B. zur Herstellung von Formkörpern.

# Hochtemperaturbeständige Polysulfon-Polyimid-Blockcopolykondensate, Verfahren zu ihrer Herstellung durch Schmelzkondensation und ihre Verwendung

Gegenstand der Erfindung sind hochtemperaturbeständige Polysulfon-Polyimid-Blockcopolykondensate, aufgebaut aus ausgewählten Polyarylenethersulfonblöcken und speziellen Polyimidblöcken und hergestellt durch Polykondensation der Polyimidblöcke in der Schmelze.

Polykondensationsprodukte mit aromatisch gebundenen Sulfongruppen sind bekannt aus Literatur- und Patentpublikationen. Verwiesen wird z.B. auf J. Chem. Soc. (1961), Seiten 1604 bis 1610; J. Polymer Sci (1959), 40, Seiten 399 bis 406 und die DE-B-1 545 106 (US-A- 4 175 175).

Polyarylenethersulfone besitzen gute mechanische Eigenschaften, beispielsweise Zähigkeit und Wärmealterungsbeständigkeit sowie gute elektrische Eigenschaften.

Statistische Ethersulfon-Etherketon-Copolymerisate mit wiederkehrenden Einheiten

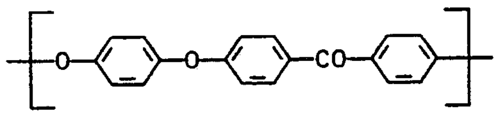

und

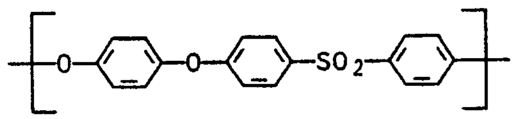

werden z.B. beschrieben in der EP-A-1879. Die Polykondensate sind erhältlich durch gleichzeitige Kondensation von Hydrochinon, 4,4′-Dichlorbenzophenon und 4,4′-Dichlordiphenylsulfon.

Bekannt sind ferner Arylenetherketon-Polykondensate mit Brückengliedern wie z.B. -CO-, -SO-, -S-, $-SO_2-$, -O-, Alkylen-, Cycloalkylen-, Arylen-, Alkyliden- oder Cycloalkylidengruppen mit 2 bis 20 C-Atomen, z.B. aus der EP-A- 030 033 oder der EP-A-161 453.

Bekannt sind auch Polyimide. Eine zusammenfassende Übersicht über ihre Herstellung, Eigenschaften und Verwendung wird beispielsweise gegeben in der Monographie "Polyimides", Volume 1 and 2, herausgegeben von K.L. Mittal, Verlag Plenum Press, New York und London, 1971 und in Chemical Process Review No. 54, Polyimide Manufacture, 1971 von Dr. M.W. Ranney, Noyes Data Corporation, New Jersey. Die Herstellung von Polyimid-Polyarylenether-Sulfon-Copolymeren in aprotischen Lösungsmitteln durch Umsetzung von 2 Molen p-Aminophenol mit 1 Mol 3,3′,4,4′-Benzophenontetracarbonsäuredianhydrid zur Bis-phenolbenzophenondiamidodicarbonsäure, deren Dehydratisierung zum Bisphenol-benzophenondiimid und dessen Polykondensation mit 4,4′-Dichlordiphenylsulfon wird beschrieben in Polymer Preprints 25 (1984), Seiten 49 bis 51.

In der US-A-4 540 748 werden aminterminierte Polyphenylethersulfone und deren Polykondensation mit aromatischen Tetracarbonsäuredianhydriden zu Polyetherimiden beschrieben.

In den genannten Publikationen nicht erwähnt werden hingegen Polysulfon-Polyimid-Blockcopolykondensate.

Zur Herstellung der Polyarylenethersulfone werden die aromatischen Dichlor- und Dihydroxyverbindungen in polaren aprotischen Lösungsmitteln in Gegenwart von Alkalimetallcarbonaten polykondensiert und anschließend durch Abtrennung des Lösungsmittels oder durch Ausfällen mit Nichtlösungsmitteln isoliert.

Auch die Polyimide werden in polaren aprotischen Lösungsmitteln polykondensiert. Hierzu werden in einer ersten Reaktionsstufe aus aromatischen Tetracarbonsäuredianhydriden und aromatischen Diaminen Polyamidocarbonsäuren hergestellt und diese in einer zweiten Reaktionsstufe üblicherweise unter Zusatz von Carbonsäureanhydriden und tertiären Aminen als Katalysator dehydratisiert.

Die Aufgabe der vorliegenden Erfindung bestand darin, die Lösungsmittel-und Spannungsrißbeständigkeit von Polyarylenethersulfonen zu verbessern. Verbessert werden sollte ferner die mechanische Stabilität bei Dauerbelastung bei erhöhten Temperaturen. Außerdem sollten die Polykondensate nach einem technisch praktikablen Verfahren kostengünstig herstellbar sein.

Diese Aufgaben konnten überraschenderweise gelöst werden durch Blockcopolykondensate, die sowohl ausgewählte Polyphenylethersulfonblöcke mit bestimmten Molekulargewichten als auch ausgewählte Polyimidblöcke mit bestimmten Molekulargewichten in bestimmten begrenzten Mengenverhältnissen gebunden enthalten. Durch die Auswahl bestimmter Monomerer konnten an die auf bekannte Weise hergestellten

Polyphenylethersulfonblöcke mit endständigen Aminogruppen in der Schmelze Polyimidblöcke ankondensiert werden. Im Vergleich zur Copolykondensation in Lösung konnte durch die erfindungs gemäße Schmelzkondensation die Reaktionszeit erheblich verkürzt, z.B. von 19 Stunden auf 15 Minuten, und dadurch die Raumzeitausbeute beträchtlich gesteigert werden. Durch die thermische Cyclisierung der primär gebildeten Polyamidocarbonsäuren zu Polyimiden, wurde die Behandlung der Polyamidocarbonsäuren mit Carbonsäureanhydriden in Lösung zur Dehydratisierung ebenso entbehrlich wie die nachfolgende Isolierung der Polysulfon-Polyimid-Blockcopolykondensate durch Ausfällen mit Nichtlösungsmitteln, Abfiltrieren, Auswaschen und Trocknen unter vermindertem Druck. Durch Einführung der Polyimidblöcke in die Polyarylenethersulfonblockpolykondensate wurde die Löslichkeit der Polysulfon-Polyimid-Blockcopolykondensate vermindert und gleichzeitig ihre Spannungsrißanfälligkeit reduziert. Die Polyimidblöcke bewirken ferner eine Erhöhung der Glasübergangstemperatur der Blockcopolykondensate, wodurch eine deutlich höhere Stabilität der mechanischen Eigenschaften bei einer Dauerbelastung im Temperaturbereich von 160 bis 180 °C erzielt wird.

Gegenstand der Erfindung sind somit hochtemperaturbeständige Polysulfon-Polyimid-Blockcopolykondensate, die enthalten oder vorzugsweise bestehen aus

A) 70 bis 98 Mol-%, vorzugsweise 80 bis 95 Mol-% und insbesondere 85 bis 95 Mol-%, bezogen auf die Summe von (A) und (B) Polyarylenethersulfonblöcken mit einem Zahlenmittelwert des Molekulargewichts $\overline{M}_n$ im Bereich von 1500 bis 20.000, aufgebaut aus Einheiten der Formeln

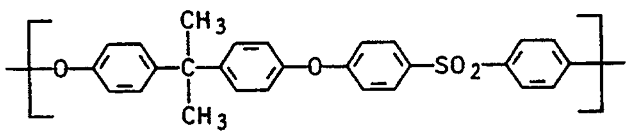 (I),

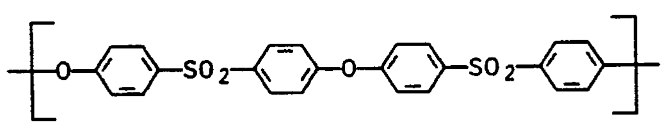 (II),

oder aus Mischungen aus Einheiten der Formeln (I) und (II), wobei diese gebunden sind in statistischer Verteilung oder in Form von Blöcken und

B) 2 bis 30 Mol-%, vorzugsweise 5 bis 20 Mol-% und insbesondere 5 bis 15 Mol-%, bezogen auf die Summe von (A) und (B), Polyimidblöcken mit einem Zahlenmittelwert des Molekulargewichts $\overline{M}_n$ von etwa 400 bis 5000, aufgebaut aus Einheiten der Formeln

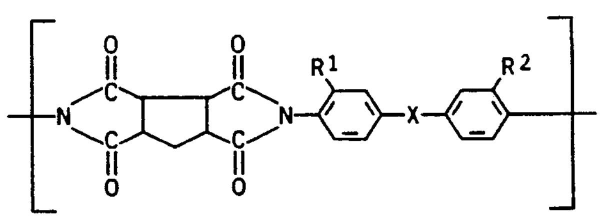 (III),

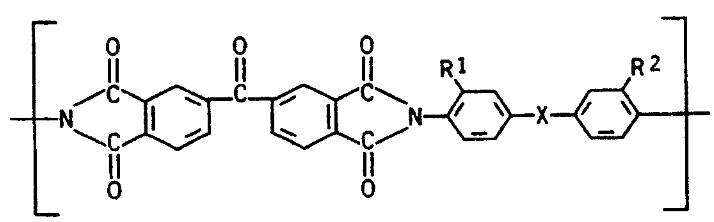 (IV),

oder aus Mischungen aus Einheiten der Formeln (III) und (IV), wobei

$R^1$ und $R^2$ gleich oder verschieden sind und eine Methylgruppe oder vorzugsweise ein Wasserstoffatom und

X ein Brückenglied aus der Gruppe $-CH_2CH_2-$ oder vorzugsweise $-CH_2-$ bedeuten

und hergestellt werden durch Schmelzkondensation.

Außerdem betrifft die Erfindung ein Verfahren zur Herstellung der hochtemperaturbeständigen

Polysulfon-Polyimid-Blockcopolykondensate, das dadurch gekennzeichnet ist, daß

a) in einer ersten Reaktionsstufe durch Umsetzung von 4,4'-Dichlor-diphenylsulfon mit 4,4'-Dihydroxy-diphenylsulfon, 4,4'-Dihydroxy-diphenylpropan-2,2 oder Mischungen aus 4,4'-Dihydroxy-diphenylsulfon und -diphenylpropan-2,2 und p-Aminophenol, 4-Amino-4'-hydroxy-diphenylpropan-2,2 oder Mischungen aus p-Aminophenol und 4-Amino-4-hydroxy-diphenylpropan-2,2 in polaren aprotischen Lösungsmitteln in Gegenwart von Alkalimetallcarbonaten, Polyarylenethersulfonblockcopolykondensate (A) mit endständigen Aminogruppen hergestellt werden und

b) an diese aminterminierten Polyarylenethersulfonblockpolykondensate in der Schmelze Polyimidblöcke (B) ankondensiert werden durch Umsetzung mit Cyclopentantetracarbonsäuredianhydrid, 3,3'4,4'-Benzophenontetracarbonsäuredianhydrid oder von Mischungen aus Cyclopentantetracarbonsäuredianhydrid und 3,3'4,4'-Benzophenontetracarbonsäuredianhydrid und mindestens einem aromatischen Diamin ausgewählt aus der Gruppe 3,3'-Dimethyl-4,4'-diamino-diphenylmethan, 3-Methyl-4,4'-diamino-diphenylmethan, 3-methyl-4,4'-diamino-diphenylethan-1,2, 3,3'-Dimethyl-4,4'- diamino-diphenylethan-1,2, 4,4'-Diamino-diphenylethan-1,2 und vorzugsweise 4,4'-Diamino-diphenylmethan oder von Mischungen aus mindestens zwei der genannten aromatischen Diamine bei Temperaturen von 300 bis 350° C, wobei die Monomeren in solchen Mengen verwendet werden, daß die resultierenden Polyarylenethersulfonblöcke (A) und Polyimidblock (B) im Verhältnis der Molprozente von 98:2 bis 70:30 gebildet werden.

Weitere Erfindungsgegenstände sind die Verwendung der hochtemperaturbeständigen Polysulfon-Polyimid-Blockcopolykondensate nach einem der Ansprüche 1 bis 5 zur Herstellung von Formkörpern und Formkörper, die enthalten oder bestehen aus hochtemperaturbeständigen Polysulfon-Polyimid-Blockcopolykondensaten nach einem der Ansprüche 1 bis 5.

Als Komponente (A) enthalten die erfindungsgemäßen Polysulfon-Polyimid-Blockcopolykondensate, wie bereits ausgeführt wurde, Polyarylenethersulfonblöcke aus Einheiten der Formeln (I) oder (II)

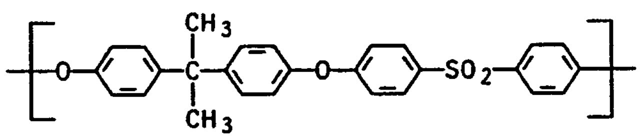

(I),

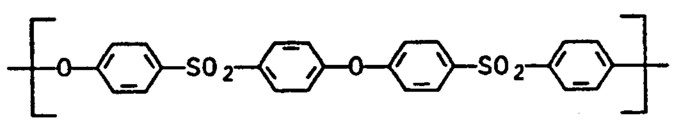

(II),

Geeignet sind auch Polyarylenethersulfonblöcke, die aus Mischungen der Einheiten der Formeln (I) und (II) bestehen und diese Einheiten in statistischer Verteilung oder in Form von Blöcken gebunden enthalten.

Das Molekulargewicht $\overline{M}_n$ (Zahlenmittelwert) der Polyarylenethersulfonblöcke (A) liegt im Bereich von 1500 bis 20.000, vorzugsweise von 3000 bis 19.000 und insbesondere von 5000 bis 18.000.

Als Komponente (B) enthalten die erfindungsgemäßen hochtemperaturbeständigen Polysulfon-Polyimid-Blockcopolykondensate, wie ebenfalls bereits dargelegt wurde, Polyimidblöcke, die aufgebaut sind aus Einheiten der Formeln

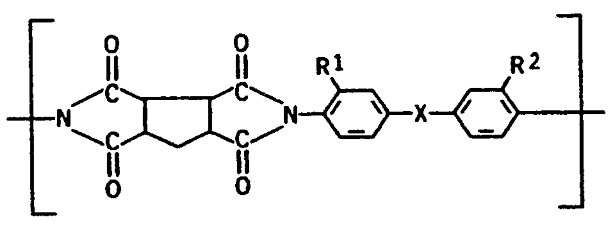

(III),

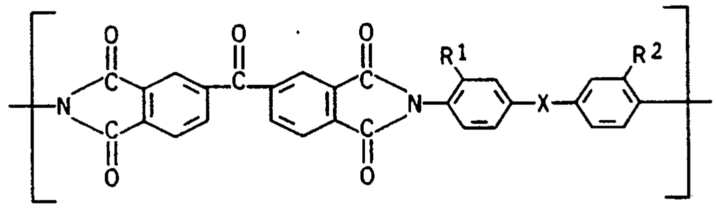 (IV),

oder aus Mischungen aus Einheiten der Formeln (III) und (IV), wobei die Einheiten in statistischer Verteilung oder in Blockform angeordnet sein können und $R^1$, $R^2$ und X die vorgenannte Bedeutung besitzen.

Beispiele für Einheiten der Formeln (III) oder (IV) der Polyimidblöcke sind

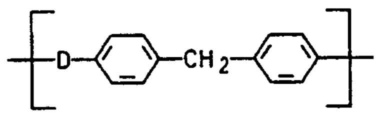

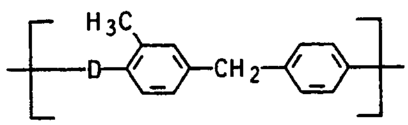

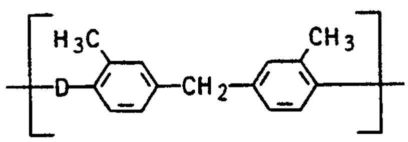

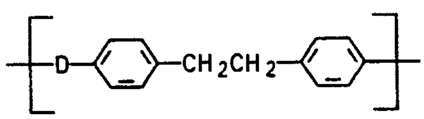

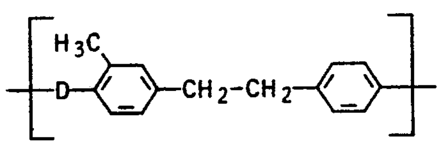 und

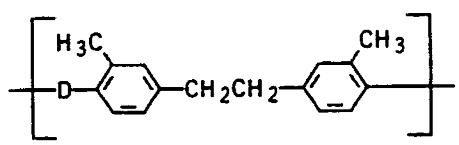

wobei D

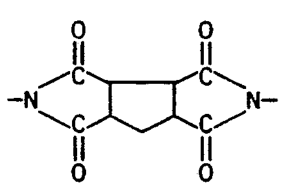 oder 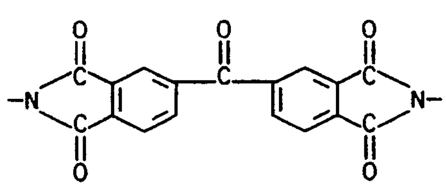

bedeuten. Bevorzugt sind Einheiten der Formeln

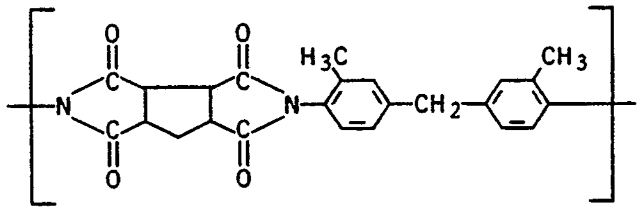

(III2),

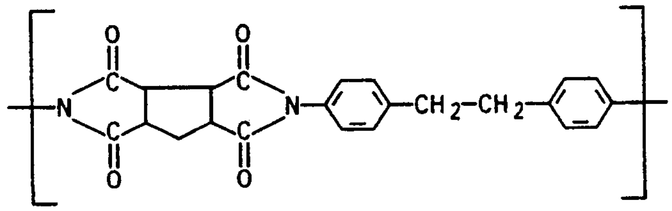

(III3),

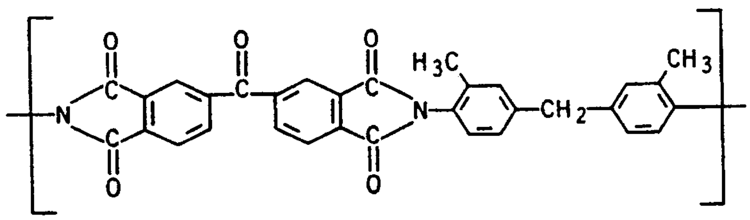

(IV2),

und

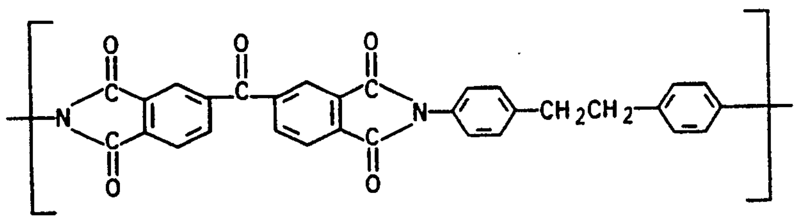

(IV3),

und insbesondere bevorzugt Einheiten der Formeln

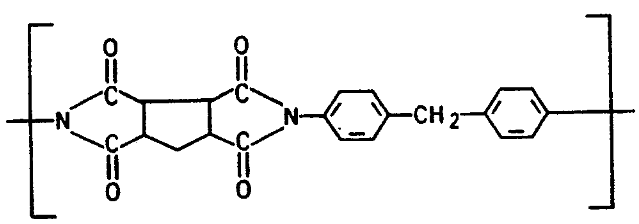

(III1),

und/oder

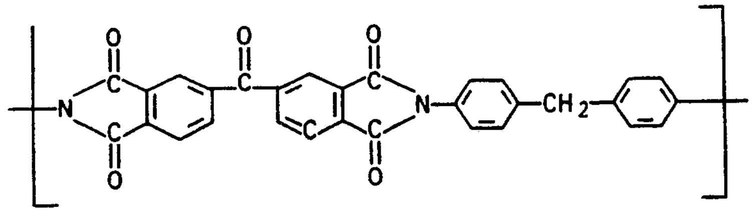

(IV1),

oder Mischungen aus mindestens zwei Einheiten der Formeln (III1) bis (III3) und (IV1) bis (IV3), insbesondere Mischungen aus Einheiten der Formeln (III1) und (IV1).

Das Molekulargewicht $\overline{M}_n$ (Zahlenmittelwert) der Polyimidblöcke (B) liegt im Bereich von 400 bis 5000,

vorzugsweise von 800 bis 4500 und insbesondere von 1000 bis 4000.

Die erfindungsgemäßen hochtemperaturbeständigen Polysulfon-Polyimid-Blockcopolykondensate können kontinuierlich oder diskontinuierlich in einer zweistufigen Reaktion hergestellt werden. Grundsätzlich können die Polyarylenethersulfonblöcke (A), insbesondere solche mit endständigen Aminogruppen nach an sich bekannten, in der Literatur beschriebenen Verfahren und Polyimidblöcke, insbesondere solche mit endständigen Anhydridgruppen, getrennt hergestellt und anschließend miteinander verknüpft werden oder aber die Blockcopolykondensate werden durch entsprechende aufeinanderfolgende Zugabe der Monomeren direkt synthetisiert.

Nach dem bevorzugt zur Anwendung kommenden zweistufigen Herstellungsverfahren werden aromatische Dihalogenverbindungen, aromatische Dihydroxyverbindungen und aromatische Aminohydroxyverbindungen in polaren aprotischen Lösungsmitteln in Gegenwart von Alkalimetallcarbonaten so polykondensiert, daß

a) in einer ersten Reaktionsstufe durch Umsetzung von Monomeren der Formeln

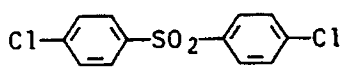

mit

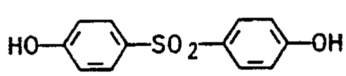

und/oder

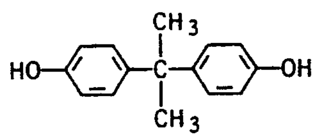

und

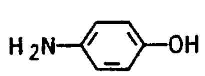

und/oder

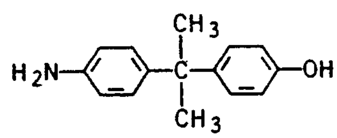

Polyarylenethersulfonblockpolykondensate (A) mit endständigen Aminogruppen hergestellt werden. Hierzu werden die Monomeren in solchen Mengen verwendet, daß das Molverhältnis von 4,4'-Dihydroxy-diphenylsulfon und/oder 4,4'-Dihydroxy-diphenylpropan-2,2 zu para-Aminophenol und/oder 4-Amino-4'-hydroxy-diphenylpropan-2,2 5:2 bis 90:2, vorzugsweise 50:2 bis 75:2 beträgt und das Verhältnis von Chloratomen des 4,4'-Dichlor-diphenylsulfons zu Hydroxylgruppen der Dihydroxyverbindungen und des p-Aminophenols und/oder 4-Amino-4'-hydroxy-diphenylpropan-2,2's im Bereich von 0,95:1 bis 1,05:1, vorzugsweise bei 1:1 liegt.

An die erhaltenen Polyphenylenethersulfonblockpolykondensate mit endständigen Aminogruppen werden in einer zweiten Reaktionsstufe in der Schmelze durch Umsetzung mit cis,cis,cis,cis-Cyclopentantetracarbonsäuredianhydrid, 3,3'4,4'-Benzophenontetracarbonsäuredianhydrid oder Mischungen aus den genannten Dianhydriden und aromatischen Diaminen, ausgewählt aus der Gruppe 3-Methyl-, 3,3'-Dimethyl-4,4'-diamino-diphenylmethan, 3-Methyl-, 3,3'-Dimethyl-4,4'-diamino-diphenylethan-1,2,4,4'-Diaminodiphenylethan-1,2 und vorzugsweise 4,4'-Diamino-diphenylmethan oder aus Mischungen aus mindestens zwei der genannten aromatischen Diamine Polyimidblöcke ankondensiert. Das Molverhältnis von aminterminierten Polyphenylenethersulfonblockpolykondensaten zu aromatischen Diaminen beträgt 1:1 bis 1:15, vorzugsweise 1:2 bis 1:10. In Abhängigkeit vom gewünschten Molekulargewicht der Polyimidblöcke werden das Cyclopentan- und/oder 3,3'4,4'-Benzophenontetracarbonsäureanhydrid und die aromatischen Diamine und aminterminierten Polyarylenethersulfonblockpolykondensate in solchen Mengen verwendet, daß das Verhältnis von Anhydrid zu Aminogruppen im Bereich von 0,95:1 bis 1,05:1, vorzugsweise bei 1:1 liegt.

Zur Herstellung der erfindungsgemäßen hochtemperaturbeständigen Polysulfon-Polyimid-Blockcopolykondensate können die verschiedenartigen Polyarylenethersulfonblöcke und unterschiedlichen Polyimidblöcke, solange die Voraussetzungen des Anspruchs 1 erfüllt sind, prinzipiell in beliebiger Weise miteinander kombiniert werden.

Das Gesamtmolekulargewicht der Polysulfon-Polyimid-Blockcopolykondensate liegt im Bereich von 15.000 bis 200.000, vorzugsweise von 15.000 bis 100.000 und insbesondere von 20.000 bis 50.000.

Alle vorstehend genannten Molekulargewichtswerte sind Zahlenmittelwerte, wie sie z.B. in E. Vollmert, Grundriß der Makromolekularen Chemie, Bd. 3, S. 122ff (1979) definiert sind.

Die Verfahrensbedingungen zur Herstellung der Polyarylenethersulfonblöcke, insbesondere der aminterminierten Polyarylenethersulfonblockpolykondensate, wie z.B. Temperatur, Druck, geeignete Lösungsmittel und evtl. Zusätze (Katalysatoren) sind die gleichen, wie sie für statistische Copolykondensate in der EP-A-113 112 und der EP-A-135 130 bzw. für aminterminierte Copolykondensate in der EP-A-107 897 oder US 4 540 748 beschrieben sind, so daß sich hierzu nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als basischer Katalysator.

Die Menge an N-Methylpyrrolidon beträgt im allgemeinen 5 bis 100 Mol, vorzugsweise 5 bis 20 Mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines verminderten Drucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 130 bis 220 °C, vorzugsweise 160 bis 210 °C; die Reaktionsdauer beträgt im allgemeinen 0,1 bis 15 Stunden.

Die Isolierung der aminterminierten Polyarylenethersulfonblockpolykondensate aus der Lösung kann durch Verdampfen des Lösungsmittels oder durch Ausfällung mit einem geeigneten Nichtlösungsmittel wie z.B. Wasser, Alkanol u.a. erfolgen.

Zur Herstellung der erfindungsgemäßen Polysulfon-Polyimid-Blockcopolykondensate werden die aminterminierten Polyarylenethersulfonblöcke, aromatischen Diamine und aromatischen Tetracarbonsäuredianhydride erfindungsgemäß in der Schmelze, zweckmäßigerweise in Gegenwart eines Inertgases, wie z.B. einem Edelgas, Kohlenmonoxid oder vorzugsweise Stickstoff bei einer Temperatur im Bereich von 300 bis 350 °C, vorzugsweise 340 bis 350 °C polykondensiert. Die intermediär gebildeten Polyamidocarbonsäuren werden unter den vorliegenden Reaktionsbedingungen direkt zu Polyimidblockpolykondensaten dehydratisiert. Das freiwerdende Wasser wird abdestilliert. Die Reaktionszeit zur Polykondensation der Polyimidblökke beträgt üblicherweise 5 bis 30 Minuten, vorzugsweise 10 bis 20 Minuten.

Nach dem zweckmäßigsten und daher vorzugsweise angewandten Herstellungsverfahren werden die in einem separaten Reaktionsschritt hergestellten aminterminierten Polyarylenethersulfone, aromatischen Diamine und aromatischen Tetracarbonsäuredianhydride in üblichen Mischvorrichtungen, beispielsweise Mischern, bei Temperaturen von 15 bis 80 °C, vorzugsweise von 20 bis 30 °C gemischt und danach in der Schmelze in einem Extruder, vorzugsweise einem Doppelschneckenextruder mit Entgasungsvorrichtungen, polykondensiert. Die gebildete Polysulfon-Polyimid-Blockcopolykondensatschmelze wird anschließend extrudiert, abgekühlt und granuliert. Die erhaltenen Granulate können zwischengelagert, gegebenenfalls modifiziert oder direkt zur Herstellung von beispielsweise Folien, Überzügen oder vorzugsweise Formkörpern verwendet werden.

Die Produkte zeichnen sich durch eine verbesserte Lösungsmittelbeständigkeit, geringe Spannungsrißanfälligkeit und mechanische Dauerbelastbarkeit, auch bei erhöhten Temperaturen, z.B. von 160 °C und darüber aus.

Die erfindungsgemäß durch Schmelzkondensation hergestellten Polysulfon-Polyimid-Blockcopolykondensate können gegebenenfalls mit verstärkend wirkenden Füllstoffen, Pigmenten und anderen Hilfs- und Zusatzstoffen modifiziert werden.

Als verstärkend wirkende Füllstoffe seien beispielsweise Kohle- und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Gläsern mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.-%, vorzugsweise 20 bis 50 Gew.-%, des Verstärkungsmittels, bezogen auf das Gesamtgewicht, während die imprägnierten Glasgewebe, -matten und/oder -vliese zwischen 10 und 80 Gew.%, vorzugsweise zwischen 30 und 60 Gew.-%,

Polysulfon-Polyimid-Blockcopolykondensate, bezogen auf das Gesamtgewicht, enthalten. Als Pigmente eignen sich beispielsweise Titandioxid, Cadmiumoxid, Zinksulfid, Bariumsulfat und Ruß. Als andere Zusatz- und Hilfsstoffe kommen beispielsweise in Betracht: Farbstoffe, Schmiermittel, wie z.B. Graphit, Polytetrafluorethylen oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl und Bornitrid oder Mischungen dieser Füllstoffe sind verwendbar. Die Pigmente, Zusatz- und Hilfsstoffe werden üblicherweise in Mengen von 0,01 bis 3 Gew.-%, bezogen auf das Gewicht der Polysulfon-Polyimid-Blockcopolykondensate, eingesetzt.

Die erfindungsgemäßen hochtemperaturbeständigen Polysulfon-Polyimid-Blockcopolykondensate finden vorzugsweise Verwendung zur Herstellung von Formkörpern, wobei diese teilweise oder zweckmäßigerweise vollständig aus den Blockcopolykondensaten bestehen.

Die in den nachfolgenden Beispielen angegebene reduzierte Viskosität $\eta$ spec/c der aminterminierten Polyarylenethersulfonblockpolykondensate wurde bei 25 °C in 1 gew.%iger Lösung in N-Methylpyrrolidon und die der erfindungsgemäßen Polysulfon-Polyimid-Blockcopolykondensate bei 60 °C in 0,1 gew.%iger Lösung in Pentafluorphenol bestimmt.

Beispiele

Herstellung von Polyarylenethersulfonblockpolykondensaten mit endständigen primären Aminogruppen

Beispiel 1

Die Reaktionsmischung, bestehend aus
361,82 g (1,26 Mol) 4,4′-Dichlor-diphenylsulfon,
273,96 g (1,2 Mol) 4,4′-Dihydroxy-diphenylpropan-2,2,
13,24 g (0,1212 Mol) p-Aminophenol und
248,78 g (1,8 Mol) Kaliumcarbonat in
800 ml N-Methylpyrrolidon, wurde unter intensivem Rühren und Begasen mit Stickstoff in ungefähr 20 Minuten auf 195 °C erhitzt. Das gebildete Reaktionswasser wurde innerhalb von 45 Minuten in Form eines azeotropen N-Methyl-pyrrolidon/Wasser-Gemisches abdestilliert und die Polykondensation in einem Zeitraum von 6 Stunden bei 195 °C zu Ende geführt.

Nach dem Abkühlen der Reaktionsmischung auf ungefähr 23 °C wurde das Polysulfonblockpolykondensat mit Wasser/Methanol im Gewichtsverhältnis 1:1 ausgefällt, viermal mit jeweils 3000 ml Wasser gewaschen, abfiltriert und unter vermindertem Druck 12 Stunden lang getrocknet.

Das erhaltene Produkt besaß eine reduzierte Viskosität in N-Methylpyrrolidon von 0,26 dl/g und 82,5 % Aminoendgruppen, bezogen auf die Anzahl der Endgruppen.

Beispiel 2

Man verfuhr analog den Angaben des Beispiels 1, verwendete jedoch die Einsatzstoffe in folgenden Mengen:
361,82 g (1,26 Mol) 4,4′-Dichlor-diphenylsulfon,
280,64 g (1,23 Mol) 4,4′-Dihydroxy-diphenylpropan-2,2,
6,78 g (0,062 Mol) p-Aminophenol und
191,62 g (1,386 Mol) Kaliumcarbonat sowie 1300 ml N-Methylpyrrolidon.

Das hergestellte Polysulfonblockpolykondensat besaß eine reduzierte Viskosität in N-Methyl-pyrrolidon von 0,38 dl/g und 71 % Aminoendgruppen, bezogen auf die Gesamtzahl der Endgruppen.

Beispiel 3

Man verfuhr analog den Angaben des Beispiels 1, verwendete jedoch folgende Einsatzstoffe und Mengen:
361,82 g (1,26 Mol) 4,4′-Dichlor-diphenylsulfon,
273,96 g (1,20 Mol) 4,4′-Dihydroxy-diphenylpropan-2,2,

27,51 g (0,01212 Mol) 4-Amino-4′-hydroxy-diphenylpropan-2,2,
248,78 g (1,8 Mol) Kaliumcarbonat und
800 ml N-Methylpyrrolidon.

Das erhaltene Produkt besaß eine reduzierte Viskosität in N-Methylpyrrolidon von 0,28 dl/g und 84 Aminoendgruppen, bezogen auf die Gesamtzahl der Endgruppen.

Beispiel 4

Man verfuhr analog den Angaben des Beispiels 1, verwendete jedoch die Einsatzstoffe in folgenden Mengen:
361,82 g (1,26 Mol) 4,4′-Dichlor-diphenylsulfon,
300,00 g (1,20 Mol) 4,4′-Dihydroxy-diphenylsulfon,
13,24 g (0,1212 Mol) p-Aminophenol und
248,78 g (1,8 Mol) Kaliumcarbonat sowie 800 ml N-Methylpyrrolidon.

Das erhaltene aminterminierte Polyarylenethersulfonblockcopolykondensat besaß eine reduzierte Viskosität in N-Methyl-pyrrolidon von 0,23 dl/g und 72 % Aminoendgruppen, bezogen auf die Gesamtzahl der Endgruppen.

Beispiel 5

Man verfuhr analog den Angaben des Beispiels 1, verwendete jedoch die folgenden Einsatzstoffe und Mengen:
361,82 g (1,26 Mol) 4,4′-Dichlor-diphenylsulfon,
307,50 g (1,23 Mol) 4,4′-Dihydroxy-diphenylsulfon,
14,07 g (0,062 Mol) 4-Amino-4′-hydroxy-diphenylpropan-2,2,
191,62 g (1,386 Mol) Kaliumcarbonat sowie 1300 ml N-Methylpyrrolidon.

Das erhaltene aminterminierte Polyarylenethersulfonblockcopolykondensat besaß eine reduzierte Viskosität in N-Methyl-pyrrolidon von 0,34 dl/g und 69 % Aminoendgruppen, bezogen auf die Gesamtzahl der Endgruppen.

Herstellung der erfindungsgemäßen Polysulfon-Polyimid-Blockcopolykondensate.

Beispiel 6

Eine Mischung, bestehend aus
37,07 g (0,0016 Mol) Polysulfon mit endständigen Aminogruppen, hergestellt gemäß Beispiel 2,
1,70 g (0,0085 Mol) 4,4′-Diamino-diphenylmethan (97 gew.%ig) und
2,28 g (0,01016 Mol)cis,cis,cis,cis-Cyclopentantetracarbonsäuredi anhydrid (96 gew.%ig)
wurde unter intensivem Durchmischen in einem Kneter und Begasen mit Stickstoff auf 350 °C erhitzt. Das bei der Polykondensation freiwerdende Reaktionswasser wurde abdestilliert und die Polykondensation bei 350 °C innerhalb 15 Minuten zu Ende geführt.

Das auf diese Weise hergestellte Polysulfon-Polyimid-Blockcopolykondensat besaß eine reduzierte Viskosität in Pentafluorphenol von 0,58 dl/g und eine Glasübergangstemperatur Tg von 192 °C (gemessen nach DSC)

Beispiel 7

Man verfuhr analog den Angaben des Beispiels 6, verwendete jedoch die Einsatzstoffe in folgenden Mengen:
33,36 g (0,0015 Mol) Polysulfon mit endständigen Aminogruppen, hergestellt nach Beispiel 2,
3,40 g (0,017 Mol) 4,4′-Diamino-diphenylmethan (97 gew.%ig) und
4,16 g (0,0185 Mol) cis,cis,cis,cis-Cyclopentantetracarbonsäuredianhydrid (96 gew.%ig)

Das erhaltene Polysulfon-Polyimid-Blockcopolykondensat besaß eine reduzierte Viskosität in Pentafluorphenol von 0,46 dl/g und eine Glasübergangstemperatur Tg von 189 °C (gemessen nach DSC).

Beispiel 8

Man verfuhr analog den Angaben des Beispiels 6, verwendete jedoch die folgenden Einsatzstoffe und Mengen
37,07 g (0,0016 Mol) Polysulfon mit endständigen Aminogruppen, hergestellt nach Beispiel 2,
1,70 g (0,0085 Mol) 4,4′-Diamino-diphenylmethan (97 gew.%ig) und
3,41 g (0,01016 Mol) 3,3′4,4′-Benzophenontetracarbonsäuredianhydrid (96 gew.%ig)

Das erhaltene Polysulfon-Polyimid-Blockcopolykondensat besaß eine reduzierte Viskosität in Pentafluorphenol von 0,57 dl/g und eine Glasübergangstemperatur Tg von 198 °C (gemessen nach DSC).

Beispiel 9

Man verfuhr analog den Angaben des Beispiels 6, verwendete jedoch die folgenden Einsatzstoffe und Mengen:
17,49 g (0,0016 Mol) aminterminiertes Polysulfon, hergestellt gemäß Beispiel 1,
1,70 g (0,0085 Mol) 4,4′-Diamino-diphenylmethan (97 gew.%ig) und
2,38 g (0,0101 Mol) cis,cis,cis,cis-Cyclopentantetracarbonsäuredianhydrid (96 gew.%ig).

Das erhaltene Polysulfon-Polyimid-Blockcopolykondensat besaß eine reduzierte Viskosität in Pentafluorphenol von 0,60 dl/g und eine Glasübergangstemperatur Tg von 195 °C (gemessen nach DSC).

Beispiel 10

Man verfuhr analog den Angaben des Beispiels 6, verwendete jedoch die folgenden Einsatzstoffe und Mengen:
16,13 g (0,0015 Mol) aminterminiertes Polysulfon, hergestellt gemäß Beispiel 3
3,60 g (0,017 Mol) 4,4′-Diamino-diphenylethan-1,2 (97 gew.%ig) und
4,16 g (0, 0185 Mol) cis,cis,cis,cis-Cyclopentantetracarbonsäuredianhydrid (96 gew.%ig).

Das erhaltene Polysulfon-Polyimid-Blockcopolykondensat besaß eine reduzierte Viskosität in Pentafluorphenol von 0,56 dl/g und eine Glasübergangstemperatur Tg von 191 °C (gemessen nach DSC).

Beispiel 11

Man verfuhr analog den Angaben des Beispiels 6, verwendete jedoch die folgenden Einsatzstoffe und Mengen:
15,75 g (0,0015 Mol) aminterminiertes Polysulfon, hergestellt gemäß Beispiel 4,
3,40 g (0,017 Mol) 4,4′-Diamino-diphenylmethan (97 gew.%ig und
6,21 g (0,0185 Mol) 3,3′,4,4′-Benzophenontetracarbonsäuredianhydrid (96 gew.%ig).

Das erhaltene Polysulfon-Polyimid-Blockcopolykondensat besaß eine reduzierte Viskosität in Pentafluorphenol von 0,45 dl/g und eine Glasübergangstemperatur Tg von 223 °C (gemessen nach DSC).

**Ansprüche**

1. Hochtemperaturbeständige Polysulfon-Polyimid-Blockcopolykondensate, die enthalten, bezogen auf die Summe von (A) und (B)
A) 70 bis 98 Mol-% Polyarylenethersulfonblöcken mit einem Zahlenmittelwert des Molekulargewichts $\overline{M}_n$ im Bereich von 1500 bis 20.000, aufgebaut aus Einheiten der Formeln

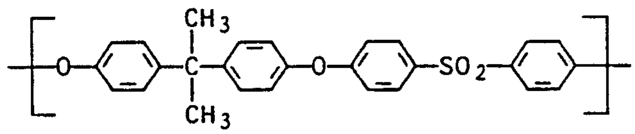 (I),

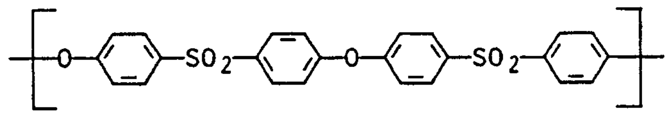 (II),

oder aus Mischungen aus Einheiten der Formeln (I) und (II), wobei diese gebunden sind in statistischer Verteilung oder in Form von Blöcken und

B) 2 bis 30 Mol-% Polyimidblöcken mit einem Zahlenmittelwert des Molekulargewichts $\overline{M}_n$ von etwa 400 bis 5000, aufgebaut aus Einheiten der Formeln

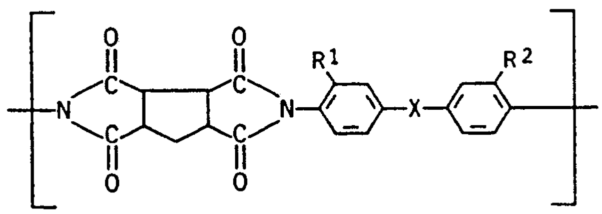 (III),

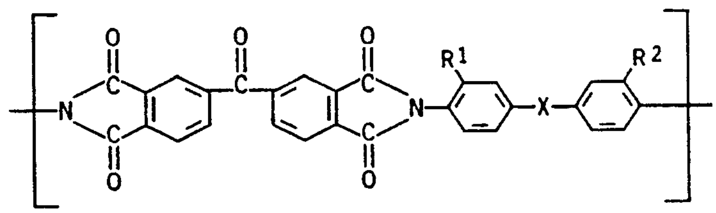 (IV),

oder aus Mischungen aus Einheiten der Formeln (III) und (IV), wobei

$R^1$ und $R^2$ gleich oder verschieden sind und ein Wasserstoffatom oder eine Methylgruppe und

X ein Brückenglied aus der Gruppe $-CH_2-$ oder $-CH_2CH_2-$

bedeuten

und hergestellt werden durch Schmelzkondensation.

2. Hochtemperaturbeständige Polysulfon-Polyimid-Blockcopolykondensate nach Anspruch 1, bestehend, bezogen auf die Summe von (A) und (B), aus

A) 70 bis 98 Mol-% Polyarylenethersulfonblöcken, aufgebaut aus Einheiten der Formeln (I), (II) oder von Mischungen davon und

B) 2 bis 30 Mol-% Polyimidblöcken, aufgebaut aus Einheiten der Formeln (III), (IV) oder von Mischungen davon.

3. Hochtemperaturbeständige Polysulfon-Polyimid-Blockcopolykondensate nach einem der Ansprüche 1 bis 2, dadurch gekennzeichnet, daß die Polyarylenethersulfonblöcke (A) bestehen aus Einheiten der Formel (I).

4. Hochtemperaturbeständige Polysulfon-Polyimid-Blockcopolykondensate nach einem der Ansprüche 1 bis 3, dadurch gekennzeichnet, daß die Polyimidblöcke (B) aufgebaut sind aus mindestens einer der folgenden Einheiten der Formeln

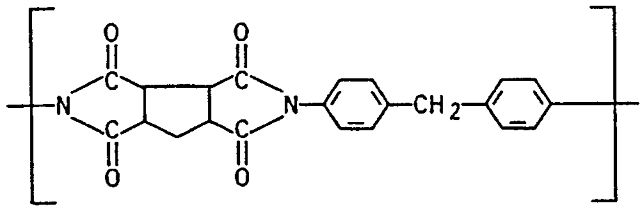

(III1),

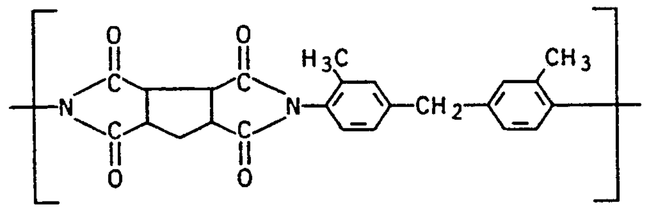

(III2),

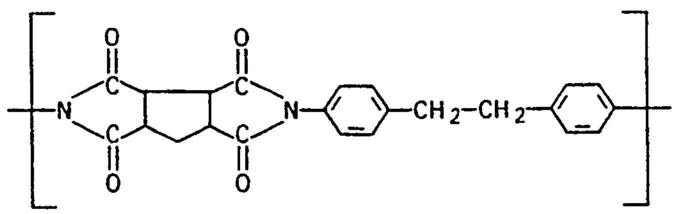

(III3),

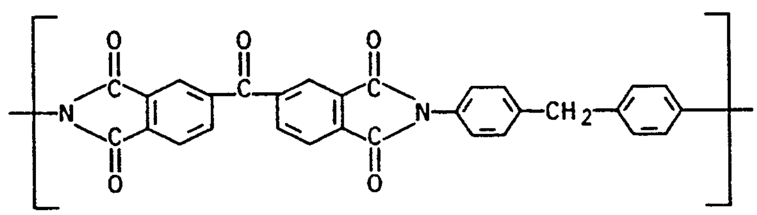

(IV1),

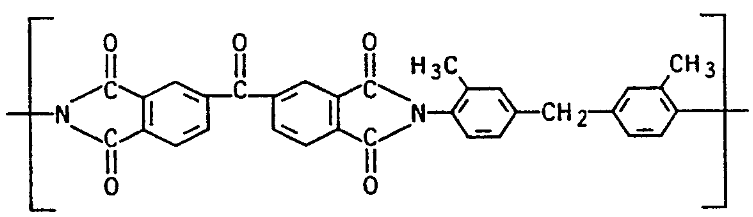

(IV2),

und

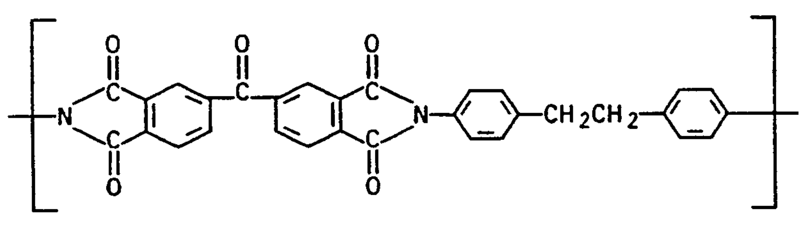

(IV3),

5. Hochtemperaturbeständige Polysulfon-Polyimid-Blockcopolykondensate nach einem der Ansprüche 1 bis 3, dadurch gekennzeichnet, daß die Polyimidblöcke (B) aufgebaut sind aus Einheiten der Formeln (III1) und/oder (IV1).

6. Verfahren zur Herstellung von hochtemperaturbeständigen Polysulfon-Polyimid-Blockcopolykondensaten, dadurch gekennzeichnet, daß

a) in einer ersten Reaktionsstufe durch Umsetzung von 4,4′-Dichlor-diphenylsulfon mit 4,4′-Dihydroxy-diphenylsulfon, 4,4′-Dihydroxy-diphenylpropan-2,2 oder Mischungen aus 4,4′-Dihydroxy-diphenylsulfon und -diphenylpropan-2,2 und p-Aminophenol, 4-Amino-4′-hydroxy-diphenylpropan-2,2 oder Mischungen aus p-Aminophenol und 4-Amino-4′-hydroxy-diphenylpropan-2,2 in polaren aprotischen Lösungsmitteln in Gegenwart von Alkalimetallcarbonaten, Polyarylenethersulfonblockcopolykondensate (A) mit endständigen Aminogruppen hergestellt werden und

b) an diese aminterminierten Polyarylenethersulfonblockpolykondensate in der Schmelze Polyimidblöcke (B) ankondensiert werden durch Umsetzung mit Cyclopentantetracarbonsäuredianhydrid, 3,3′4,4′-Benzophenontetracarbonsäuredianhydrid oder von Mischungen aus Cyclopentantetracarbonsäuredianhydrid und 3,3′4,4′-Benzophenontetracarbonsäuredianhydrid und mindestens einem aromatischen Diamin ausgewählt aus der Gruppe 4,4′-Diamino-diphenylmethan, 3-Methyl-4,4′-diamino-diphenylmethan, 3,3′-Dimethyl-4,4′-diamino-diphenylmethan, 4,4′-Diaminodiphenylethan-1,2, 3-Methyl-4,4′-diamino-diphenylethan-1,2 und 3,3′-Dimethyl-4,4′-diamino-diphenylethan-1,2 oder von Mischungen aus mindestens zwei der genannten aromatischen Diamine bei Temperaturen von 300 bis 350 °C.

7. Verfahren nach Anspruch 6, dadurch gekennzeichnet, daß das Molverhältnis von 4,4′-Dihydroxy-diphenylsulfon und/oder 4,4′-Dihydroxy-diphenylpropan-2,2 zu p-Aminophenol und/oder 4-Amino-4′-hydroxy-diphenylpropan-2,2 5:2 bis 90:2 beträgt und das Verhältnis von Chloratomen zu Hydroxylgruppen im Bereich von 0,95:1 bis 1,05:1 liegt.

8. Verfahren nach Anspruch 6, dadurch gekennzeichnet, daß das Molverhältnis von aminterminiertem Polyarylenethersulfonblockpolykondensat zu aromatischen Diaminen 1:1 bis 1:15 beträgt und das Verhältnis von Anhydridgruppen der Cyclopentan- und/oder 3,3′,4,4′-Benzophenontetracarbonsäuredianhydride zu Aminogruppen der 4,4′-Diamino-diphenylmethan, 3-Methyl-4,4′-diamino-diphenylmethan, 3,3′-Dimethyl-4,4′-diamino-diphenylmethan, 3-Methyl-4,4′-diamino-diphenylethan-1,2, 3,3′-Dimethyl-4,4′-diamino-diphenylethan-1,2 und/oder 4,4′-Diamino-diphenylethan-1,2 und aminterminierten Polyarylenethersulfonblockpolykondensaten im Bereich von 0,95:1 bis 1,05:1 liegt.

9. Verwendung der hochtemperaturbeständigen Polysulfon-Polyimid-Blockcopolykondensate nach einem der Ansprüche 1 bis 5 zur Herstellung von Formkörpern.

10. Formkörpern, enthaltend hochtemperaturbeständige Polysulfon-Polyimid-Blockcopolykondensate nach einem der Ansprüche 1 bis 5.